# EUROPEAN PATENT APPLICATION

(11) **EP 4 360 455 A1**
(43) Date of publication of application: **01.05.2024**
(21) Application number: 22828084.8
(22) Date of filing: 10.05.2022
(51) Int. Cl.: A01N 1/02, F16K 24/06

(54) **LEAK VALVE AND STORAGE CONTAINER**

(30) Priority: 22.06.2021 JP 2021103002
(71) Applicant: SCREEN Holdings Co., Ltd., Kyoto-shi, Kyoto 602-8585 (JP)
(72) Inventor: KASAMATSU Hiroo, Kyoto-shi, Kyoto 602-8585 (JP); YOSHIMOTO Syuhei, Kyoto-shi, Kyoto 602-8585 (JP); OHARA Masayuki, Kyoto-shi, Kyoto 602-8585 (JP)
(74) Representative: Goddar, Heinz J.
(86) International application number: PCT/JP2022/019789
(87) International publication number: WO 2022/270165

(57) **Abstract**

A leak valve (10) for adjusting pressure inside a preservation container (20) includes a case (70) having a communicating port (730) and an intake port (710), an opening and closing plate (81) arranged in the case (70), and a biasing member (84) that biases the opening and closing plate (81). The opening and closing plate (81) is movable between a closed position (P1) in which a first space (S1) communicating with the intake port (710) and a second space (S2) communicating with a communicating port (730) are isolated from each other, and an open position (P2) in which the first space (S1) and the second space (S2) communicate with each other. The biasing member (84) biases the opening and closing plate (81) in a direction from the open position (P2) toward the closed position (P1). The opening and closing plate (81) is pressed toward the closed position (P1) by a biasing force of the biasing member (84) when atmospheric pressure in the communicating port (730) and atmospheric pressure in the intake port (710) are approximately the same. When atmospheric pressure in the communicating port (730) becomes lower than predetermined atmospheric pressure, the opening and closing plate (81) opens to prevent the pressure in the preservation container (20) from becoming lower than the predetermined atmospheric pressure. As a result, it is possible to maintain the pressure in the preservation container (20) at an appropriate negative pressure without using any complex control mechanism.

## Description

### [Technical Field]

The present invention relates to a leak valve for adjusting pressure inside a preservation container that preserves a biological sample such as an organ ex vivo.

### [Background Art]

In organ transplant operations such as liver transplantation, an organ removed from the donor is temporarily preserved ex vivo until the organ is transplanted into the recipient. At this time, the organ is placed in a preservation container and perfused with a preservation solution in order to prevent the organ from becoming ischemic. An example of a conventional system for preserving an organ ex vivo is disclosed in Patent Literature (PTL) 1.

### [Citation List]

### [Patent Literature]

### [PTL 1]

PTL 1: Japanese Unexamined Patent Application Publication (Translation of PCT Application) No.2017-518301

### [Summary of Invention]

### [Technical Problem]

In the organ care system disclosed in PTL 1, a liver during perfusion is placed in an organ chamber (104). In the case of perfusion of such an organ placed in the preservation container, it is preferable that atmospheric pressure applied to the organ be adjusted in order to improve the flow of a preservation solution in the organ. Specifically, the flow of the preservation solution is known to be improved by reducing pressure to expand blood vessels. Similar studies on pressure application are carried out not only in the field of organs but also in the field of cell culture.

However, negative pressure applied to an organ or cells is weak on the order of about 0 mmHg to -30 mmHg, and in order to accurately maintain pressure within this pressure range, a complex control mechanism has been conventionally necessary.

The present invention has been made in light of such circumstances, and it is an object of the present invention to provide a technique for maintaining pressure in a preservation container that preserves a biological sample at an appropriate negative pressure without using any complex control mechanism.

### [Solution to Problem]

To solve the problem described above, a first aspect of the present application is a leak valve for adjusting pressure inside a preservation container for preserving a biological sample. The leak valve includes a case having a communicating port and an intake port, the communicating port communicating with an interior of the preservation container, the intake port communicating with an external space, an opening and closing plate arranged in the case, and a biasing member that biases the opening and closing plate. The opening and closing plate is movable between a closed position in which a first space communicating with the intake port and a second space communicating with the communicating port are isolated from each other in the case, and an open position in which the first space and the second space communicate with each other. The biasing member biases the opening and closing plate in a direction from the open position toward the closed position, and the opening and closing plate is pressed toward the closed position by a biasing force of the biasing member when atmospheric pressure in the communicating port and atmospheric pressure in the intake port are approximately the same.

A second aspect of the present application is the leak valve according to the first aspect that further includes a ring-shaped seal member. The intake port is arranged on one side of the case, the seal member is fixed to an inner surface of the case on the one side to surround the intake port, and when the opening and closing plate is located in the closed position, a surface of the opening and closing plate on the one side comes in tight contact with a surface of the seal member on the other side.

A third aspect of the present application is the leak valve according to the first or second aspect that further includes a shaft whose end on the one side is arranged outside the case and whose end on the other side is fixed to the opening and closing plate in an internal space of the case. The intake port is arranged on the one side of the case, the shaft penetrates an interior of the intake port, the opening and closing plate expands in a direction perpendicular to the shaft, and the biasing member biases the opening and closing plate toward the one side in a direction of extension of the shaft.

A fourth aspect of the present application is the leak valve according to the third aspect that further includes a flange member fixed to the shaft outside the case and expanding in a direction perpendicular to the shaft. The biasing member is a coil spring that is arranged around the shaft and between the flange member and an outer surface of the case on the one side.

A fifth aspect of the present application is the leak valve according to the fourth aspect, in which the shaft is a bolt having an outer peripheral surface provided with a screw thread, and the flange member is a nut having a through hole whose inner peripheral surface is provided with a thread groove.

A sixth aspect of the present application is the leak valve according to any one of the first to fifth aspects that further includes a filter arranged at the communicating port.

A seventh aspect of the present application is a preservation container for preserving a biological sample. The preservation container includes a cup-shaped container body that opens upward, a container lid that covers an opening at a top of the container body, and the leak valve according to any one of claims 1 to 6, the leak valve being mounted on either the container body or the container lid.

### [Advantageous Effects of Invention]

According to the first to seventh aspects of the present application, it is possible to reduce the possibility that the pressure in the preservation container may become lower than the predetermined pressure, without using any complex control mechanism.

In particular, according to the second aspect of the present application, it is possible to reduce the risk of gas leakage between the first space and the second space at the time of closing the opening and closing plate.

In particular, according to the fifth aspect of the present application, it is possible to easily change the length of the coil spring, i.e., the biasing force exerted by the coil spring, by changing the position of the nut relative to the bolt.

In particular, according to the sixth aspect of the present application, it is possible to reduce the risk of mixing of foreign matters into the preservation container via the leak valve.

### [Brief Description of Drawings]

Fig. 1 is a diagram showing a configuration of an organ preservation device.
Fig. 2 is a sectional view of a leak valve.
Fig. 3 is a diagram showing the force acting on an opening and closing plate at the time of reducing pressure in an organ container.
Fig. 4 is a diagram showing pressure inside the organ container during activation of a pressure-reducing mechanism.
Fig. 5 is a sectional view of a leak valve according to a variation.
Fig. 6 is a sectional view of a leak valve according to another variation.

### [Description of Embodiment]

Hereinafter, an embodiment of the present invention will be described with reference to the drawings.

In the present application, the "donor" and the "recipient" may be humans or may be non-human animals. That is, the "organ" according to the present application may be a human organ or may be an organ of a non-human animal. Examples of the non-human animal include rodents such as mice and rats, ungulates such as pigs, goats, and sheep, non-human primates such as chimpanzees, and any other non-human mammal, and the non-human animal may be a non-mammalian animal.

### 1. Configuration of Organ Preservation Device

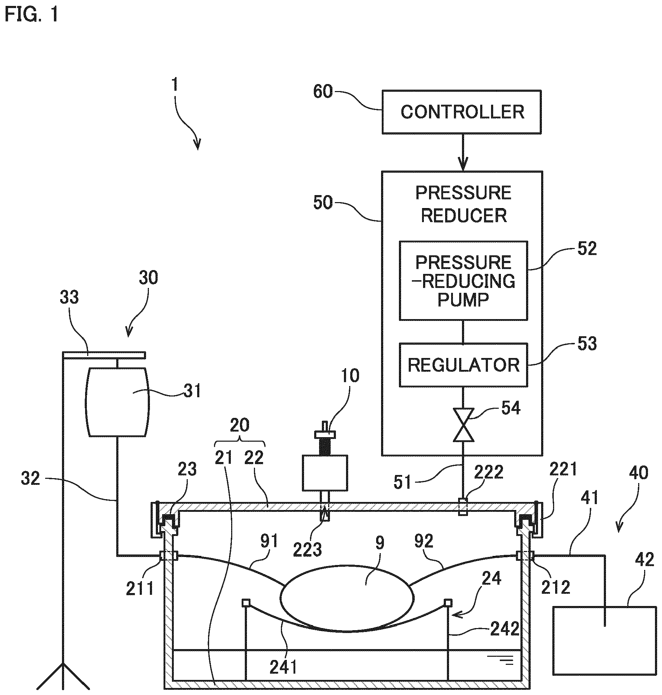

Fig. 1 is a diagram showing a configuration of an organ preservation device 1 that includes an organ container 20 provided with a leak valve 10 according to one embodiment.

The organ preservation device 1 is a device for use in an organ transplant operation and for temporarily preserving an organ 9 removed from the donor ex vivo until the organ 9 is transplanted into the recipient. Examples of the organ 9 include a liver, a kidney, a heart, and a pancreas. It is however noted that the organ 9 to be preserved in the organ preservation device 1 may be any other organ, or may be part of an organ. The organ preservation device 1 preserves the organ 9 while perfusing blood vessels in the organ 9 with a preservation solution such as a physiological saline.

In the transplant of the organ 9, a catheter is connected to each of the arteries and veins of the organ 9. Hereinafter, the catheter connected to an artery of the organ 9 is referred to as a "first catheter 91." The catheter connected to a vein of the organ 9 is referred to as a "second catheter 92." The preservation solution flows into the artery of the organ 9 through the first catheter 91 and are discharged from the vein through the second catheter 92 after flowing through capillary vessels of the organ 9. Alternatively, the "first catheter 91" through which the preservation solution flows into may be connected to a vein of the organ 9. For example, in the case where the organ 9 is a liver, the details of which will be described later, the "first catheter 91" may be connected to a portal vein of the venous system. The "second catheter 92" through which the preservation solution is discharged does not necessarily have to be connected to the organ 9. For example, the preservation solution may be discharged as-is from the vein of the organ 9 and stored in the organ container 20 described later, and one end of the "second catheter" may be positioned at the site of the storage to allow the discharge of the preservation solution from the other end of the "second catheter "to the space outside the organ container 20.

As shown in Fig. 1, the organ preservation device 1 according to the present embodiment includes the organ container 20, a liquid supplier 30, a drainage 40, a pressure reducer 50, and a controller 60.

The organ container 20 is a preservation container for preserving a biological sample such as a removed organ. The organ container 20 includes a container body 21 and a container lid 22. The container body 21 is a cup-shaped member that opens upward. The container lid 22 is a member that covers the opening at the top of the container body 21. For example, the container body 21 and the container lid 22 may be formed of a resin.

Packing 23 having elasticity is provided at the joint of the container body 21 and the container lid 22. The packing 23 is arranged along the entire periphery of the edge of the opening of the container body 21. The organ container 20 is sealed when the container body 21 and the container lid 22 are fixed to each other by a plurality of (in the present embodiment, two) hooks 221 provided on the container lid 22. Note that the number of hooks 221 may be three or more.

As shown in Fig. 1, the container body 21 includes a first flow-path joint 211 and a second flow-path joint 212. Each of the first flow-path joint 211 and the second flow-path joint 212 penetrates the side wall of the container body 21 in the horizontal direction and allows the connection of catheters from the inside and outside of the container body 21.

The container lid 22 includes an intake-tube joint 222 and a leak-valve joint 223. Each of the intake-tube joint 222 and the leak-valve joint 223 penetrates the container lid 22 in the up-down direction. The internal space of the organ container 20 communicates with the interior of an intake tube 51 described later when the intake tube 51 is connected to the intake-tube joint 22 from the outside of the container lid 22.

The leak valve 10 described later is connected to the leak-valve joint 223. The internal space of the leak valve 10 and the internal space of the organ container 20 communicate with each other when a port 75 of the leak valve 10 described later is connected to the leak-valve j oint 223. Note that a specific configuration of the leak valve 10 will be described later.

In the case of placing the organ 9 inside the organ container 20, an organ holder 24 is arranged inside the organ container 20. The organ holder 24 holds the organ 9 in the organ container 20. The organ holder 24 includes a flexibly deformable holding sheet 241 and a support member 242. The edge of the holding sheet 241 is supported by the support member 242 that is fixedly attached to the bottom surface of the container body 21. This allows the holding sheet 241 to be maintained in an approximately horizontal open condition.

The organ 9 is placed on the upper surface of the holding sheet 241. When the organ 9 is placed, the holding sheet 241 becomes deformed along the surface shape of the organ 9. This prevents deformation of the organ 9 and allows the organ 9 to be held with reduced loads applied to the organ 9.

The material for the holding sheet 241 may be a resin having bioadaptability, sterilization retention properties, and flexibility. Examples of the material for the holding sheet 241 include polypropylene, polyethylene, polyurethane, polyvinylidene chloride, polystyrene, elastomeric resins, silicon, rubber, gel materials, and polyamide.

As shown in Fig. 1, water or a preservation solution is stored on the bottom of the organ container 20. This prevents the organ 9 from drying in the organ container 20. In particular, moisture becomes more susceptible to be vaporized with ease from the organ 9 by reducing pressure in the space of the organ container 20 as will be described later, but the storage of water or a preservation solution on the bottom of the organ container 20 reduces the risk of drying of the organ 9. Note that the drying of the organ 9 may be prevented by immersing the holding sheet 241 in water or a preservation solution. As another alternative, the top of the organ 9 may be covered with a sheet that has been immersed in water or a preservation solution in order to further prevent the drying of the organ 9.

The liquid supplier 30 supplies a preservation solution to the organ 9. The liquid supplier 30 according to the present embodiment includes a liquid reservoir 31 and a supply tube 32.

The liquid reservoir 31 stores a preservation solution before supply to the organ 9. The liquid reservoir 31 according to the present embodiment is a pouch bag (so-called drip bag) in which a preservation solution is stored. Note that the liquid reservoir 31 may be in any other form such as a so-called tank or bottle as long as it serves as a container capable of storing a preservation solution. The liquid reservoir 31 is held at a position higher than the organ 9 held in the organ container 20 by a bag holder 33.

The supply tube 32 is a tube for supplying a preservation solution from the liquid reservoir 31 to the organ 9 held in the organ container 20. The upstream end of the supply tube 32 is connected to the liquid reservoir 31. The downstream end of the supply tube 32 is detachably connected to the first flow-path joint 211 provided at the container body 21 from the outside of the container body 21. The other end of the first catheter 91 whose one end is connected to the artery of the organ 9 is detachably connected to the inside of the first flow-path joint 211. This forms a flow path for the preservation solution that flows from the liquid reservoir 31 through the supply tube 32, the first flow-path joint 211, and the first catheter 91 into the organ 9.

In the present embodiment, the path of the supply tube 32 is provided with no supply pump. A height difference between the liquid reservoir 31 and the organ 9 causes the preservation solution to flow from the liquid reservoir 31 through the supply tube 32 into the artery of the organ 9. In this way, the omission of a supply pump simplifies the device configuration and reduces pressure loads applied to the organ 9 as a result of inflow of the preservation solution.

The drainage 40 includes a drainage tube 41 and a drain tank 42. The drainage tube 41 is a tube for discharging the preservation solution from the organ 9 held in the organ container 20. The downstream end of the drainage tube 41 is connected to the drain tank 42. The upstream end of the drainage tube 41 is detachably connected to the outside of the second flow-path joint 212 provided at the container body 21. The other end of the second catheter 92 whose one end is connected to the vein of the organ 9 is detachably connected to the inside of the second flow-path joint 212. This forms a flow path for the preservation solution that is discharged from the organ 9 through the second catheter 92, the second flow-path joint 212, and the drainage tube 41 into the drain tank 42. That is, the preservation solution discharged from the vein of the organ 9 flows through the second catheter 92, the second flow-path joint 212, and the drainage tube 41 and is collected in the drain tank 42. In the case where the liquid reservoir 31 is a tank for storing a preservation solution, the preservation solution collected in the drain tank 42 may be circulated to the liquid reservoir 31 and reused.

The pressure reducer 50 is arranged outside the organ container 20. The pressure reducer 50 is a pressure-reducing mechanism for sucking gas from the inside of the organ container 20 and reducing pressure in the organ container. As shown in Fig. 1, the pressure reducer 50 according to the present embodiment includes the intake tube 51, a pressure-reducing pump 52, a regulator 53, and an on-off valve 54.

The upstream end of the intake tube 51 is detachably connected to the intake-tube joint 222 provided at the container lid 22. Thus, the upstream end of the intake tube 51 communicates with the internal space of the organ container 20. The downstream end of the intake tube 51 is connected to the pressure-reducing pump 52. The regulator 53 and the on-off valve 54 are provided in the path of the intake tube 51. Accordingly, when the pressure-reducing pump 52 is operated, gas is sucked from the internal space of the organ container 20 through the intake tube 51 and discharged to the external space. As a result, atmospheric pressure in the organ container 20 is reduced. The regulator 53 raises the negative pressure generated by the pressure-reducing pump 52 to a higher fixed negative pressure (with a smaller absolute value when expressed by the gage pressure). The on-off valve 54 is a valve for switching an airflow in the intake tube 51 between an open state and a stopped state.

The controller 60 controls the operations of the pressure reducer 50. For example the controller 60 may be configured as an electronic circuit board or a computer that includes a processor such as a CPU and memory such as a RAM. The controller 60 is electrically connected to each of the pressure-reducing pump 52, the regulator 53, and the on-off valve 54 described above. The controller 60 controls the operations of these components in accordance with preset programs. Accordingly, atmospheric pressure in the organ container 20 is regulated.

### 2. Configuration of Leak Valve

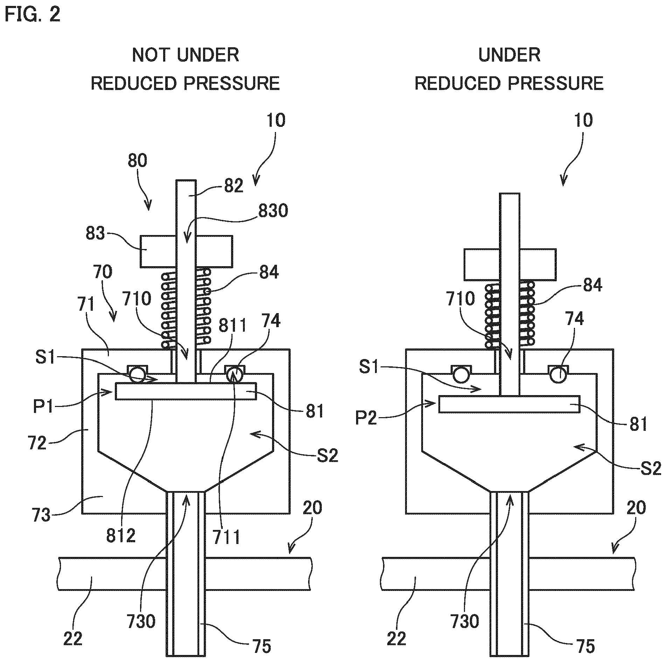

Next, a configuration of the leak valve 10 will be described with reference to Fig. 2. Fig. 2 is a longitudinal sectional view of the leak valve 10. Atmospheric pressure in the space outside an intake port 710 is hereinafter referred to as to an "outside pressure." Also, atmospheric pressure in the space outside a communicating port 730 (i.e., the space inside the organ container 20) is hereinafter referred to as an "inside pressure." The diagram on the left side in Fig. 2 shows the leak valve 10 when the outside pressure and the inside pressure are approximately the same. That is, the diagram on the left side in Fig. 2 shows the leak valve 10 when an atmospheric pressure difference between the outside pressure and the inside pressure is less than or equal to a predetermined value. The diagram on the right side in Fig. 2 shows the leak valve 10 when the inside pressure is lower than the outside pressure and the atmospheric pressure difference between the outside pressure and the inside pressure is greater than the predetermined value.

The following description is given using the up-down direction, assuming that the side closer to the intake port 710 relative to the communicating port 730 is the upper side. However, the posture of the leak valve 10 during use is not limited to this orientation. The leak valve 10 may be used in such a posture that the communicating port 730 and the intake port 710 are arranged side by side in the horizontal direction (in positions at the same level of height). In the present embodiment, the upper side means "one side" and the lower side means the "other side."

The leak valve 10 includes a case 70 and a moving part 80.

As shown in Fig. 2, the case 70 is a member having an internal space. In the present embodiment, the case 70 has a cylinder-like outside shape. Specifically, the case 70 includes a disk-like upper plate 71, a cylinder-like side wall 72 extending downward from the outer edge of the upper plate 71, and a bottom 73 that covers an opening at the bottom of the side wall 72.

The upper plate 71 includes the intake port 710 in the center in a top view, the intake port 710 being a through hole that penetrates the upper plate vertically. That is, the intake port 710 is arranged on the upper side (one side) of the case 70.

During use of the leak valve 10, the leak valve 10, except part of the port 75 described later, is arranged outside the organ container 20. Thus, the intake port 710 is arranged in the space outside the organ container 20 and communicates with the space outside the organ container 20.

The lower surface of the upper plate 71 is provided with a ring-shaped groove 711 that is recessed upward and located in a position surrounding the intake port 710. Then, a ring-shaped seal member 74 is provided to fit in the groove 711.

The seal member 74 is fixedly attached to the lower surface of the upper plate 71. That is, the seal member 74 is fixedly attached to the inner surface on the upper side (one side) of the case 70. The seal member 74 is arranged in a position surrounding the intake port 710. Specifically, the upper surface side of the seal member 74 is housed inside the groove 711. The seal member 74 may be fitted in and fixedly attached to the groove 711 while becoming elastically deformed, or may be bonded to the lower surface of the upper plate 71.

The bottom 73 has a cylinder-like outside shape. The bottom 73 has a communicating port 730 in the center in a bottom view, the communicating port being a through hole that penetrates the bottom vertically. The inner surface of the bottom 73 has a conical shape that tapers down from the lower end portion of the side wall 72 toward the communicating port 730. Note that the bottom 73 may have a disk-like shape, like the upper plate 71.

The port 75 is mounted at the communicating port 730. The port 75 corresponds to a cylinder-like portion that extends downward from the communicating port 730. The joint of the upper end of the port 75 and the communicating port 730 is configured to prevent air leakage. Note that the port 75 and the bottom 73 of the case 70 may be formed as an integral unit.

During use of the leak valve 10, the port 75 is inserted in and fixed to the leak-valve joint 223 provided at the container lid 22 of the organ container 20. Thus, the communicating port 730 of the leak valve 10 and the internal space of the organ container 20 communicate with each other. Note that the outer peripheral surface of the port 75 and the leak-valve joint 223 are brought into tight contact with each other and fixed to prevent gas leakage. For example, the port 75 and the leak-valve joint 223 may be fixed with an adhesive, or the leak-valve joint 223 may be provided with an adapter that prevents gas leakage.

The moving part 80 includes an opening and closing plate 81, a shaft 82, a flange member 83, and a coil spring 84. The moving part 80 is movable in the up-down direction relative to the case 70. When the moving part 80 is arranged on the uppermost side (one side), the opening and closing plate 81 is arranged in a closed position P1 as shown on the left side in Fig. 2. The diagram on the right side in Fig. 2 shows a state in which the opening and closing plate 81 is arranged in an open position P2 located below the closed position P1.

The opening and closing plate 81 is a disk-like member. The opening and closing plate 81 is arranged approximately parallel to the lower surface of the upper plate 71 of the case 70. That is, the opening and closing plate 81 expands perpendicularly to the up-down direction.

The shaft 82 is a column-like member extending in the up-down direction. The upper-side (one-side) end of the shaft 82 is arranged outside and above the case 70. The lower-side (other-side) end of the shaft 82 is fixed to the central portion of the opening and closing plate 81 in the internal space of the case 70. Thus, the opening and closing plate 81 expands in a direction perpendicular to the shaft 82.

The flange member 83 is fixed to the shaft 82 outside and above the case 70. The flange member 83 expands in a direction perpendicular to the shaft 82.

The coil spring 84 is a biasing member that biases the opening and closing plate 81. The coil spring 84 is arranged between the upper surface of the upper plate 71 of the case 70 and the lower surface of the flange member 83. The coil spring 84 is arranged so as to cover around the shaft 82.

A distance between the upper surface of the upper plate 71 and the lower surface of the flange member 83 is designed to become shorter than the natural length of the coil spring 84 when the opening and closing plate 81 is located in the closed position P1. The coil spring 84 is thus always in a compressed state. Accordingly, the coil spring 84 applies force in a direction causing the upper surface of the upper plate 71 and the lower surface of the flange member 83 to stay away from each other in the up-down direction. In this case, the coil spring 84 biases the flange member 83 in a direction to the upper side (one side) relative to the case 70. Since the opening and closing plate 81, the shaft 82, and the flange member 83 are integrally fixed to one another, the coil spring 84 consequently biases the opening and closing plate 81 in a direction to the upper side (one side) relative to the case 70.

In the present embodiment, the shaft 82 serves as a bolt having an outer peripheral surface provided with a screw thread. The flange member 83 serves as a nut having a through hole 830 that penetrates the flange member vertically in the up-down direction and that has an inner peripheral surface provided with a thread groove. Accordingly, it is possible to easily change the position in the up-down direction of the flange member 83 relative to the shaft 82 by rotating the flange member 83 relative to the shaft 82. That is, it is possible to easily change the biasing force exerted by the coil spring 84 by changing the distance between the upper surface of the upper plate 71 and the lower surface of the flange member 83 when the opening and closing plate 81 is located in the closed position P1.

In this leak valve 10, when the opening and closing plate 81 is located in the closed position P1, the opening and closing plate 81 isolates a first space S1 and a second space S2 from each other in the interior of the case 70, the first space S1 communicating with the external space above the case 70 through the intake port 710, the second space S2 communicating with the internal space of the organ container 20 through the communicating port 730 and the port 75.

Specifically, the first space S1 is a space surrounded by the lower surface of the upper plate 71 of the case 70, the seal member 74, and a first surface 811 of the opening and closing plate 81. The second space S2 is an internal space of the case 70 excluding the first space S1.

In the leak valve 10 according to the present embodiment, the opening and closing plate 81 moves perpendicularly to the intake port 710 and the seal member 74. Thus, the opening and closing plate 81 located in the closed position P1 uniformly presses the entire periphery of the seal member 74. Accordingly, interstices are less likely to be created at the joint between the opening and closing plate 81 and the seal member 74.

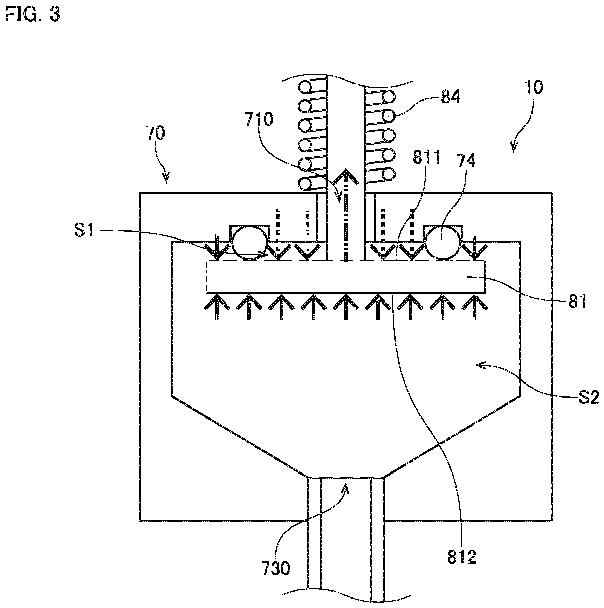

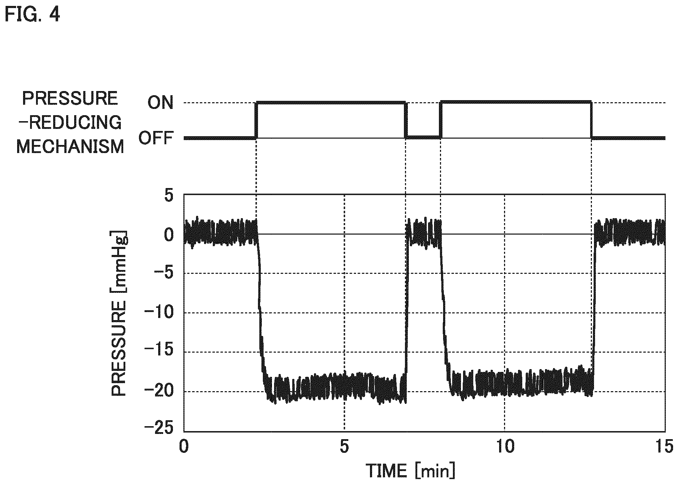

Next, the motion of the leak valve 10 at the time of reducing pressure in the organ container 20 will be described with reference to Figs. 3 and 4. Fig. 3 is a diagram showing the force acting on the opening and closing plate 81 at the time of reducing pressure in the internal space of the organ container 20. Fig. 4 is a diagram showing pressure inside the organ container 20 provided with the leak valve 10 during operation of the pressure reducer 50.

In Fig. 3, the force applied to the opening and closing plate 81 in the up-down direction is indicated by arrows. The length of each arrow indicates the magnitude of the force. As indicated by broken arrows, atmospheric pressure in the first space S1 is applied to a region of the first surface 811 that is located inward of the seal member 74. As indicated by solid arrows, atmospheric pressure in the second space S2 is applied to the entire second surface 812 and a region of the first surface 811 that is located outward of the seal member 74. Then, as indicated by a chain double-dashed arrow, the coil spring 84 biases the opening and closing plate 81 upward via the shaft 82.

In the case where the pressure in the organ container 20 (inside pressure) is the same atmospheric pressure as the outside pressure, the atmospheric pressure in the first space S1 and the atmospheric pressure in the second space S2 are the same. In this case, the atmospheric pressure applied to the first surface 811 of the opening and closing plate 81 is almost equal to the atmospheric pressure applied to the second surface 812. This gives an image that the length of the solid arrows in Fig. 3 is the same as the length of the broken arrows. Since the biasing force exerted by the coil spring 84 is further applied to the opening and closing plate 81, an upward force applied to the opening and closing plate 81 exceeds a downward force applied to the opening and closing plate 81. Accordingly, the opening and closing plate 81 does not move from the closed position P1.

When the pressure in the organ container 20 is reduced, the atmospheric pressure in the second space S2 becomes lower than the atmospheric pressure in the first space S1. This gives an image as shown in Fig. 3 that the length of the solid arrows is shorter than the length of the broken arrows. If the difference between the atmospheric pressure in the second space S2 and the atmospheric pressure in the first space S1 becomes larger than a predetermined atmospheric pressure difference, the downward force applied to the opening and closing plate 81 exceeds the upward force applied to the opening and closing plate 81. That is, the atmospheric pressure applied to the first surface 811 exceeds a total of the atmospheric pressure applied to the second surface 812 and the biasing force exerted by the coil spring 84. In this case, the opening and closing plate 81 moves downward and is located in the open position P2.

When the opening and closing plate 81 is located in the open position P2, an interval is created between the seal member 74 and the first surface 811 of the opening and closing plate 81, and the first space S1 communicates with the second space S2. In this case, gas flows from the first space S1 being at atmospheric pressure into the second space S2 being at a lower pressure. Accordingly, gas is supplied from the external space into the organ container 20 through the intake port 710, the first space S1, the second space S2, the communicating port 730, and the port 75. This reduces the possibility that the pressure in the organ container 20 may become lower than a predetermined pressure because gas is supplied when the pressure in the organ container 20 becomes lower than or equal to the predetermined pressure.

As a result, when the pressure-reducing mechanism is operated to make the pressure in the organ container 20 lower than or equal to the predetermined pressure, the opening and closing plate 81 moves repeatedly between the open position P2 and the closed position P1 to maintain the pressure in the organ container 20 at around the predetermined pressure.

The "predetermined pressure" at which the opening and closing plate 81 starts to move from the closed position P1 to maintain pressure is determined by the biasing force of the coil spring 84 and the area of the first surface 811 that comes in contact with the first space S1. Therefore, adjusting these elements makes it possible to maintain the pressure in the organ container 20 at a desired pressure.

Fig. 4 is a diagram showing the result of experiment conducted using the organ container 20 provided with the leak valve 10 according to the present embodiment. In this experiment, output of the regulator 53 reduced by the pressure reducer 50 is set to be -150 mmHg, and the on-off valve 54 opens and closes to change the pressure in the organ container 20. When the pressure-reducing mechanism shown in the upper section in Fig. 4 is turned on, the on-off valve 54 opens to start the sucking of gas via the pressure-reducing pump 52 and the regulator 53. When the pressure-reducing mechanism is turned off, the on-off valve 54 closes to stop the sucking of the gas.

As shown in Fig. 4, it is found that the use of the leak valve 10 allows the pressure in the organ container 20 to be maintained within the range of approximately -20 mmHg to -18 mmHg during a period in which the pressure reducer 50 reduces pressure using a target pressure of -150 mmHg.

In this way, the use of the leak valve 10 allows the pressure in the organ container 20 to be maintained at a predetermined pressure without using any complex control mechanism.

### 3. Variations

While the above has been a description of one embodiment of the present invention, the present invention is not intended to be limited to the above-described embodiment.

### 3-1. First Variation

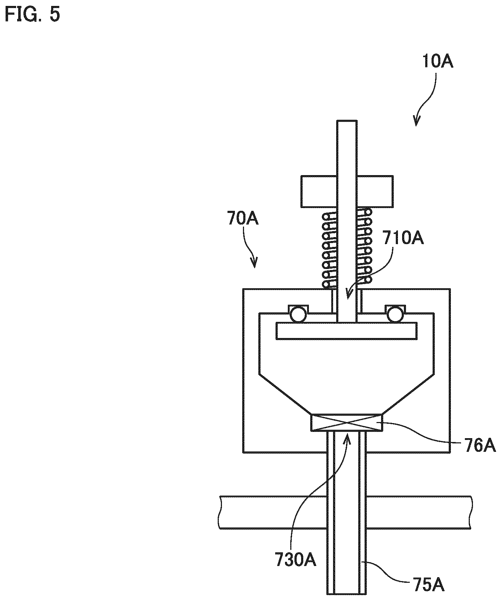

Fig. 5 is a longitudinal sectional view of a leak valve 10A according to a first variation. In the example shown in Fig. 5, the leak valve 10A includes a filter 76A provided at a communicating port 730A. The presence of the filter reduces the risk of mixing of foreign materials such as fine dust into the organ container 20 through the communicating port 730A and a port 75A, the foreign materials being included in air applied from the external space into the internal space of a case 70A through an intake port 710A.

### 3-2. Second Variation

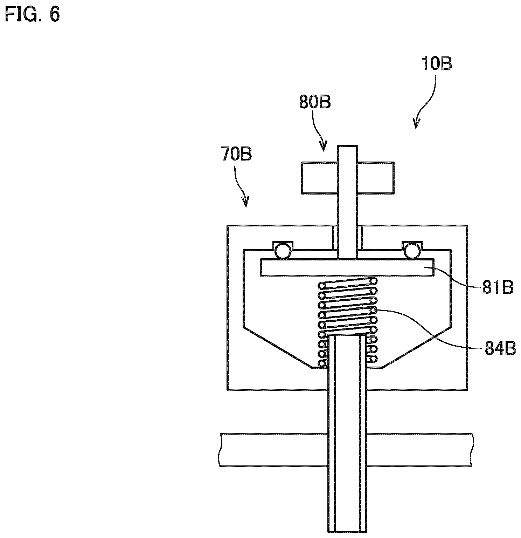

Fig. 6 is a longitudinal sectional view of a leak valve 10B according to a second variation. In the example shown in Fig. 6, the leak valve 10B includes a coil spring 84B that is provided inside a case 70B and that biases an opening and closing plate 81B. In this structure as well, the opening and closing plate 81B is biased upward by the coil spring 84B. In the structure shown in Fig. 6, a moving part 80B has a shorter protruding portion that protrudes to the outside of the case 70B. In this way, the biasing member (coil spring 84B) for biasing the opening and closing plate 81B may be arranged inside the case 70B.

### 3-3. Other Variations

Although the case 70 according to the above-described embodiment has a column-like outside shape, the present invention is not limited to this example. The case 70 may have any other shape such as a rectangular parallelepiped shape.

Although the leak valve 10 according to the above-described embodiment is mounted on the container lid 22 of the organ container 20, the present invention is not limited to this example. The leak valve 10 may be mounted on the container body 21of the organ container 20.

Although the leak valve 10 according to the above-described embodiment is mounted directly on the organ container 20, the present invention is not limited to this example. The leak valve 10 may be mounted on a piping circuit that controls atmospheric pressure inside the organ container 20. For example, in the above-described embodiment, the leak valve 10 may be mounted on the intake tube 51 of the pressure reducer 50.

Although the above-described embodiment uses the coil spring 84 as a biasing member for biasing the opening and closing plate 81, the present invention is not limited to this example. The biasing member for biasing the opening and closing plate may be any other elastic member such as a plate spring or rubber.

Although, in the above-described embodiment, the preservation container with the leak valve 10 mounted thereon is the organ container 20 for placing a removed organ therein, the present invention is not limited to this example. The preservation container with a leak valve mounted thereon may be any other container for holding a biological sample (e.g., cells) other than an organ.

The organ preservation device 1 according to the above-described embodiment includes one supply tube 32, one first catheter 91, one drainage tube 41, and one second catheter 92. Alternatively, the organ preservation device 1 may include a plurality of supply tubes 32 and a plurality of first catheters 91 depending on the number of arteries of the organ 9. The organ preservation device 1 may also include a plurality of drainage tubes 41 and a plurality of second catheters 92 depending on the number of veins of the organ 9.

Detailed structures of the organ preservation device and the organ container provided with the leak valve do not necessarily have to completely match the structures shown in the drawings of the present application. Each element given in the above-described embodiment and variations may be combined appropriately within a range that presents no contradictions.

### [Reference Signs List]

- 10, 10A, 10B: leak valve
- 20: organ container
- 21: container body
- 22: container lid
- 70, 70A: case
- 74: seal member
- 76A: filter
- 81, 81A: opening and closing plate
- 82: shaft
- 83: flange member
- 84: coil spring
- 84A: coil spring
- 710, 710A: intake port
- 730, 730A: communicating port
- P1: closed position
- P2: open position
- S1: first space
- S2: second space

## Claims

1. A leak valve for adjusting pressure inside a preservation container for preserving a biological sample, the leak valve comprising:
a case having a communicating port and an intake port, the communicating port communicating with an interior of the preservation container, the intake port communicating with an external space;
an opening and closing plate arranged in the case; and
a biasing member that biases the opening and closing plate,
wherein the opening and closing plate is movable between:
a closed position in which a first space communicating with the intake port and a second space communicating with the communicating port are isolated from each other in the case; and
an open position in which the first space and the second space communicate with each other, and
the biasing member biases the opening and closing plate in a direction from the open position toward the closed position, and the opening and closing plate is pressed toward the closed position by a biasing force of the biasing member when atmospheric pressure in the communicating port and atmospheric pressure in the intake port are approximately the same.

2. The leak valve according to claim 1, further comprising:
a ring-shaped seal member,
wherein the intake port is arranged on one side of the case,
the seal member is fixed to an inner surface of the case on the one side to surround the intake port, and
when the opening and closing plate is located in the closed position, a surface of the opening and closing plate on the one side comes in tight contact with a surface of the seal member on the other side.

3. The leak valve according to claim 1 or 2, further comprising:
a shaft whose end on the one side is arranged outside the case and whose end on the other side is fixed to the opening and closing plate in an internal space of the case,
wherein the intake port is arranged on the one side of the case,
the shaft penetrates an interior of the intake port,
the opening and closing plate expands in a direction perpendicular to the shaft, and
the biasing member biases the opening and closing plate toward the one side in a direction of extension of the shaft.

4. The leak valve according to claim 3, further comprising:
a flange member fixed to the shaft outside the case and expanding in a direction perpendicular to the shaft,
wherein the biasing member is a coil spring that is arranged around the shaft and between the flange member and an outer surface of the case on the one side.

5. The leak valve according to claim 4, wherein
the shaft is a bolt having an outer peripheral surface provided with a screw thread, and
the flange member is a nut having a through hole whose inner peripheral surface is provided with a thread groove.

6. The leak valve according to any one of claims 1 to 5, further comprising:
a filter arranged at the communicating port.

7. A preservation container for preserving a biological sample, comprising:
a cup-shaped container body that opens upward;
a container lid that covers an opening at a top of the container body; and
the leak valve according to any one of claims 1 to 6, the leak valve being mounted on either the container body or the container lid.
